# EUROPEAN PATENT APPLICATION

(11) **EP 4 625 594 A1**
(43) Date of publication of application: **01.10.2025**
(21) Application number: 24847897.6
(22) Date of filing: 27.06.2024
(51) Int. Cl.: H01M 10/0587

(54) **BATTERY CENTER TUBE AND BATTERY**

(30) Priority: 03.08.2023 CN 202322078683 U
(71) Applicant: Shanghai Xuanyi New Energy Development Co., Ltd, Shanghai 201806 (CN)
(72) Inventor: GAN, Zhijian, Shanghai 201806 (CN); WANG, Chenyang, Shanghai 201806 (CN); HUANG, Weiguo, Shanghai 201806 (CN); LI, Yang, Shanghai 201806 (CN); ZHU, Guannan, Shanghai 201806 (CN)
(74) Representative: Tranvouez, Edern Morgan
(86) International application number: PCT/CN2024/102077
(87) International publication number: WO 2025/025936

(57) **Abstract**

Disclosed are a battery central tube and a battery. The battery central tube includes: at least one deformation portion, wherein the at least one deformation portion is arranged in an annular shape, and an outer side of the at least one deformation portion is arranged to be expandable or contractible to get close to or away from an inner side of a winding core of the battery; wherein each of the at least one deformation portion includes several foldable units, the several foldable units are sequentially arranged along an annular direction of the each of the at least one deformation portion, and each of the foldable units is at least unfolded or folded and elongated or shortened along the annular direction of the deformation portion. The present invention achieves a light weight, and can improve the overall energy density of the battery to some extent.

## Description

The present invention claims priority to Chinese Patent Application No. "202322078683.X", filed on "August 03, 2023", and entitled "Battery Central Tube and Battery".

### Technical Field

The present invention relates to the technical field of batteries, and in particular, to a battery central tube and a battery.

### Background

At present, cylindrical batteries are generally produced on the basis of a winding process, and a central hole is formed in a center of the battery in a finished product. During use of the battery, especially for a silicon negative-electrode system with a large expansion change, the problem of collapse of an electrode sheet at the central hole often occurs, thereby causing shortening of the service life of the battery and even causing a safety problem, etc.

In a related art, usually, the described problem is solved by providing a central tube inside the central hole of a battery core, which achieves certain effect. However, in practical use, there is always a certain deviation between a diameter of the central tube and a dimension of the central hole of the battery, and the requirements for an assembly process are also high. Accordingly, an outer wall of the central tube of the cylindrical battery and an inner ring of a central hole of a winding core thereof tend to have a problem of non-tight fitting, which easily causes collapse of the inner side of the central hole. In addition, a tube wall of such a central tube may hinder the infiltration of an electrolyte and the flow of internal gas, thereby affecting the performance of the battery to which the central tube belongs.

### Summary

In view of this, in order to solve the described problem, an object of some embodiments of the present invention is to provide a battery central tube, including: at least one deformation portion, wherein the at least one deformation portion is arranged in an annular shape, an outer side of each of the at least one deformation portion has an expanded state and a contracted state, an outer wall of the deformation portion gets close to an inner wall of a central hole of a battery when the each of the at least one deformation portion is in the expanded state, and the outer wall of the each of the at least one deformation portion is able to get away from the inner wall of the central hole when the each of the at least one deformation portion is in the contracted state; wherein the each of the at least one deformation portion includes several foldable units, the several foldable units are sequentially arranged along an annular direction of the each of the at least one deformation portion, each foldable unit has an unfolded state and a folded state, and when the each of the plurality of foldable units is in the unfolded state, the each of the plurality of foldable units is elongated along the annular direction of the each of the at least one deformation portion; and when the each of the plurality of foldable units is in the folded state, the each of the plurality of foldable units is shortened in the annular direction of the each of the at least one deformation portion.

In some other preferred embodiments, each of the plurality of foldable units at least includes: at least one first portion and at least one second portion, wherein a deformation angle is formed between the at least one first portion and the at least one second portion; when the deformation angle increases, a corresponding foldable unit is elongated; and when the deformation angle decreases, the corresponding foldable unit is shortened.

In some other preferred embodiments, several deformation portions are sequentially arranged in an axial direction, and the several deformation portions collectively form a tubular structure.

In some other preferred embodiments, every two adjacent deformation portions in the plurality of the at least one deformation portion are directly connected or indirectly connected.

In some other preferred embodiments, every two adjacent deformation portions are indirectly connected by a connecting portion, and the connecting portion extends in the axial direction of the plurality of deformation portions.

In some other preferred embodiments, at least one mesh hole is formed between every two adjacent deformation portions in a plurality of the at least one deformation portion.

In some other preferred embodiments, the at least one deformation portion is made of a metal material or a non-metal material.

In some other preferred embodiments, an inner side of the at least one deformation portion has at least one annular contact surface, and when the annular contact surface is subjected to a radially outward pressure, the each of the plurality of foldable units is elongated.

In some other preferred embodiments, the battery central tube further includes: a force applying device, wherein the force applying device movably extends into the inner side of the deformation portion, and the force applying device is used for providing the pressure.

An object of some embodiments of the present invention is also to provide a battery including the above battery central tube.

As some embodiments of the present invention adopt the technical solutions above, positive effects of the present invention compared with the related art are: by applying some embodiments of the present invention, provided is a central tube structure radially expandable or contractible to sufficiently fit to the central bore of the battery, which is particularly suitable for a cylindrical lithium battery, ameliorates the problem of collapse of an electrode sheet at the central hole caused by the fact that an outer wall of the existing central tube is not fitted to the central hole of the battery, and also facilitates the infiltration of an electrolyte and the flow of internal gas, thereby optimizing the performance of the battery, and prolonging the cycle service life of the battery. Some embodiments of the present invention achieve a simple structure and a light weight, and can improve the overall energy density of the battery to some extent; moreover, the assembling process is simple, and the installation cost of the battery is reduced.

### Brief Description of the Drawings

Fig. 1 is a schematic diagram of overall expansion of a battery central tube according to some embodiments of the present invention;
Fig. 2 is a schematic diagram of a deformation portion of a battery central tube according to some embodiments of the present invention;
Fig. 3 is a schematic diagram of working of a force applying device of a battery central tube according to some embodiments of the present invention;
Fig. 4 is a schematic perspective diagram of a tubular structure of a battery central tube according to some embodiments of the present invention; and
Fig. 5 is an overall schematic diagram of a battery according to some embodiments of the present invention.

In the drawings:
1. Deformation portion; 2. Foldable unit; 3. First portion; 4. Second portion; 5. Deformation angle; 6. Tubular structure; 7. Connecting portion; 8. Mesh hole; 9. Force applying device; 10. Annular contact surface; 11. Battery.

### Detailed Description of the Embodiments

Some embodiments of the present invention will be further described below in conjunction with the accompanying drawings and specific embodiments, but they shall not be construed as limitations to some embodiments of the present invention.

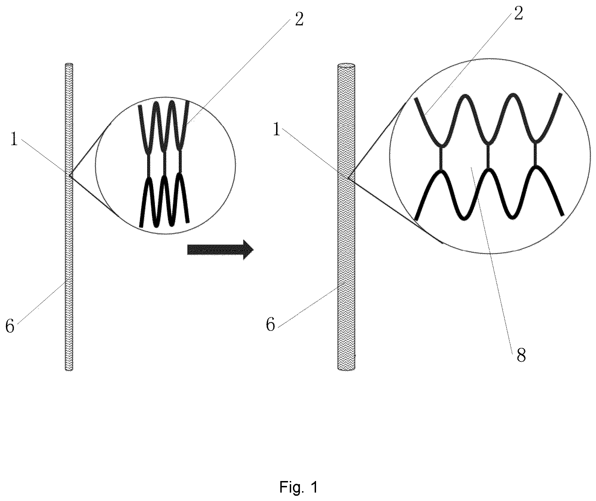

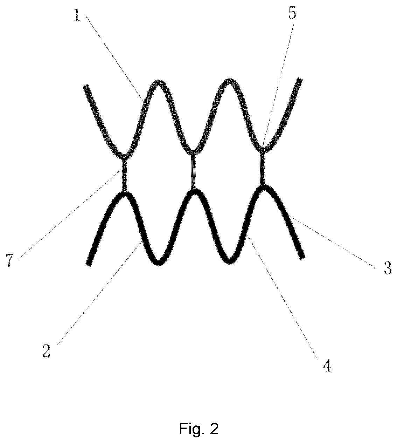

As shown in Figs. 1 and 2, a battery central tube is shown, and includes: at least one deformation portion 1, wherein the at least one deformation portion 1 is arranged in an annular shape, an outer side of each of the at least one deformation portion 1 has an expanded state and a contracted state, an outer wall of each of the at least one deformation portion 1 gets close to an inner wall of a central hole of a battery when the at least one deformation portion 1 is in the expanded state, and the outer wall of the each of the at least one deformation portion 1 can get away from the inner wall of the central hole when the each of the at least one deformation portion 1 is in the contracted state; wherein the each of the at least one deformation portion 1 includes several foldable units 2, the several foldable units 2 are sequentially arranged along an annular direction of the deformation portion 1, each of the several foldable units 2 has an unfolded state and a folded state, and when the each of the foldable units 2 is in the unfolded state, the each of the foldable units 2 is elongated along the annular direction of the at least one deformation portion 1; and when the each of the foldable units 2 is in the folded state, the each of the foldable units 2 is shortened in the annular direction of the each of the at least one deformation portion 1. Further, an outer diameter of the whole deformation portion 1 is correspondingly increased or decreased by the unfolding or folding change of the several foldable units 2; thus, when the each deformation portion 1 is in the contracted state, the outer diameter of the deformation portion 1 is smaller than the inner diameter of the central hole, so as to facilitate assembly into the central hole; and when the deformation portion 1 is in the expanded state, in some embodiments, the outer diameter of the deformation portion 1 is equal to the inner diameter of the central hole, so as to form a stable fitting support on the inner side of the central hole.

Further, in some embodiments, the each of the foldable units 2 at least includes: at least one first portion 3 and at least one second portion 4, wherein a deformation angle 5 is formed between each of the at least one first portion 3 and each of the at least one second portion 4; when the deformation angle 5 increases, the each of the foldable units 2 is elongated; and when the deformation angle 5 decreases, the each of the foldable units 2 is shortened. Further, when deformation angles 5 of a plurality of foldable units 2 of one deformation portion 1 increase at the same time, the foldable units 2 will be unfolded, such that the outer diameter of the deformation portion 1 increases.

Further, in some embodiments, adjacent foldable units 2 in the plurality of the at least one foldable unit may be connected directly or indirectly.

Further, in some embodiments, when each foldable unit 2 is formed by direct connection of the first portion 3 and the second portion 4 by the deformation angle 5, the deformation angle 5 is formed at inner sides of ends where the first portion 3 and the second portion 4 are close to each other.

Further, in some embodiments, the foldable unit 2 can be elongated or shortened in an elastic deformation or plastic deformation manner.

Further, in some embodiments, the deformation of the each foldable unit 2 is realized by a force including a radially outward force or an axial compression force; specifically, when the force is a radially outward force, the radially outward force is provided at an inner side of the deformation portion 1, such that several foldable units 2 on the annular direction of the same deformation portion 1 are simultaneously driven by the force to move radially outward and the foldable units 2 are driven to unfold; or when the force is an axial compression force, that is, when the deformation angle 5 between the first portion 3 and the second portion 4 is small, an overall axial dimension of the foldable unit 2 formed by the first portion 3 and the second portion 4 is large. When a vertical force is received, that is, the force is applied from top to bottom, or from bottom to top, or from both top and bottom to the middle, the first portion 3 and the second portion 4 are forced by the whole axial force to increase the deformation angle 5, the axial dimension of the foldable unit 2 is decreased, and the dimensions of the first portion 3 and the second portion 4 on the annular shape are increased and the foldable unit 2 is driven to unfold.

Further, in some embodiments, outer edges of the first portion 3 and the second portion 4 may be jointly arranged in a V-shape.

Further, in some embodiments, the each foldable unit 2 at least includes: a third portion, connected between the first portion 3 and the second portion 4.

Further, in some embodiments, when an axis of the deformation portion 1 is in a vertical direction, the first portion 3 and the second portion 4 may be arranged obliquely with respect to a horizontal direction, and the third portion is arranged obliquely or parallelly with respect to the horizontal direction.

Further, in some embodiments, outer edges of the first portion 3, the second portion 4 and the third portion are jointly arranged in a U-shape or a trapezoid shape.

Further, in some embodiments, the first portion 3 and the second portion 4 are both arranged in an elongated structure, and in some embodiments, the first portion 3 and the second portion 4 are in a filament-shaped structure.

Further, in some embodiments, the deformation portion 1 may be formed by a plurality of first portions 3 and a plurality of second portions 4 alternately connected in sequence, or by the first portion 3, the second portion 4 and the third portion alternately connected in sequence. By means of the arrangement, it can be ensured that the deformation portion 1 has good flexibility, to facilitate the increase or decrease of the outer diameter of the deformation portion.

Further, in some embodiments, the deformation portion 1 has a wave-shaped structure in a length direction thereof.

Further, in some embodiments, the deformation portion 1 is in a spiral structure along the length direction of the deformation portion, the length direction of the spiral structure is the annular direction of the deformation portion 1, and the spiral structure includes several spiral units capable of axially deforming.

Further, in some embodiments, several deformation portions 1 are sequentially arranged in an axial direction, and the several deformation portions 1 collectively form a tubular structure 6.

Further, in some embodiments, every two adjacent deformation portions 1 are directly connected or indirectly connected.

Further, in some embodiments, every two adjacent deformation portions 1 are indirectly connected by a connecting portion 7, and the connecting portion 7 extends in the axial direction of the deformation portions 1.

Further, in some embodiments, the connecting portion 7 has a filament-shaped structure provided in the axial direction.

Further, in some embodiments, when the deformation portion 1 is of a wave-shaped structure, a wave crest of the wave-shaped structure is connected to another upper-side adjacent deformation portion 1 by one connecting portion 7, and a wave trough of the wave-shaped structure is connected to another lower-side adjacent deformation portion 1 by another connecting portion 7.

Further, in some embodiments, at least one mesh hole 8 is formed between every two adjacent deformation portions 1.

Further, in some embodiments, inner edges of the mesh hole 8 are preferably delimited by an upper-side deformation portion 1 and a lower-side deformation portion 1 and two adjacent connecting portions 7.

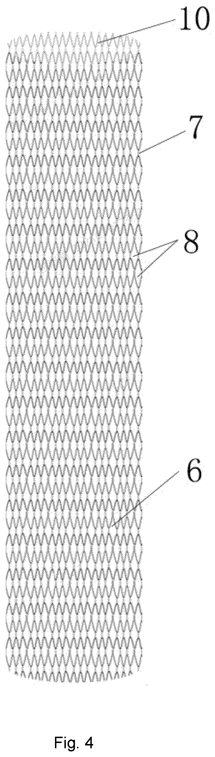

As shown in Fig. 4, further, in some embodiments, an outer wall of the tubular structure 6 is preferably arranged in a mesh shape, and several mesh holes 8 arranged in an array are formed on the outer wall of the tubular structure 6.

Further, in some embodiments, the whole tubular structure 6 preferably has a certain flexibility.

Further, in some embodiments, the deformation portion 1 is made of a metal material or a non-metal material.

Further, in some embodiments, the metal material uses one or more of copper, aluminum-titanium alloy, nickel-titanium alloy, stainless steel and cobalt-chromium alloy.

Further, in some embodiments, the non-metal material uses one or more of polypropylene, polyethylene and polytetrafluoroethylene.

Further, in some embodiments, the inner diameter of the tubular structure 6 expands or contracts in a dimension range of 0.1 mm to 10 mm.

The content above merely relates to some embodiments of the present invention, and thus does not limit the embodiments of the present invention and the scope of protection thereof.

On the basis of the above, the present invention further has the following embodiments:
in further embodiments of the present invention, the inner side of the deformation portion 1 has at least one annular contact surface 10, and when the annular contact surface 10 is subjected to a radially outward pressure, the foldable unit 2 is elongated. Further, when the outer side of the deformation portion 1 is subjected to a radially inward pressure, the foldable unit 2 may also be shortened. In some embodiments of the present invention, the battery central tube further includes: a force applying device 9, wherein the force applying device 9 movably extends into the inner side of the deformation portion 1, and the force applying device 9 is used for providing the pressure.

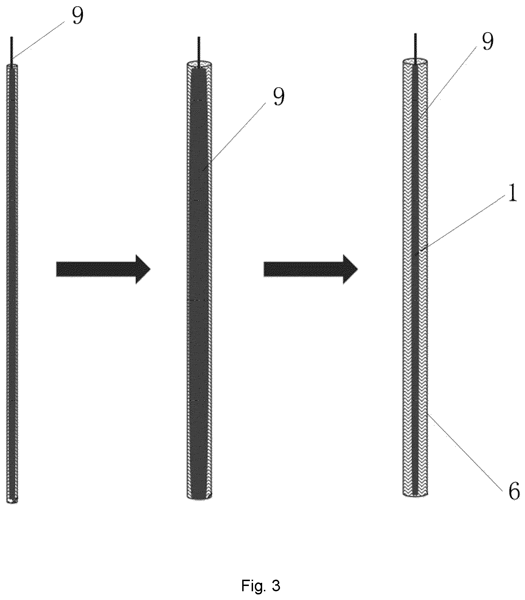

As shown in Fig. 3, in some embodiments of the present invention, the force applying device 9 is an inflatable/deflatable airbag structure. Further, when a force is applied to the deformation portion 1 by the airbag structure, the process thereof is as shown from left to right in Fig. 3, specifically, the whole central tube is first extended into the central hole of the battery; then, the airbag structure extends into the inner side of the central hole from top to bottom, and at this time, the airbag structure is in a compressed state; then the airbag structure is inflated, at which time, the airbag structure is gradually unfolded and forms the described pressure; until after the whole central tube is unfolded and fitted with the central hole of the battery, the airbag structure is compressed by exhausting gas, and the airbag structure is extracted out of the central hole, thereby completing the assembly of the central tube.

In some embodiments of the present invention, the airbag structure includes: an air guide tube and an airbag body wrapped outside the air guide tube, wherein an end of the air guide tube extends outwards and is connected to a corresponding inflation/deflation device.

In some embodiments of the present invention, when the deformation portion 1 is subjected to a radial pressure from inside to outside, each of the foldable units 2 will be elongated in the annular direction of the deformation portion 1 and shortened in the axial direction of the deformation portion 1; that is, when the each of the foldable units 2 is deformed, the length change of the foldable unit along the annular direction of the deformation portion 1 is opposite to the length change in the axial direction; also that is, the deformation portion 1 may be driven to contract or expand in the annular direction by exerting a tensile force or a pressure in the axial direction of the deformation portion 1.

In some embodiments of the present invention, after force applying and deformation of the deformation portion 1 are completed by the force applying device 9 so as to make the deformation portion fit to the central hole of the battery, by applying axial limiting in advance, the deformation portion 1 can be controlled to maintain an expanded state without contracting into the original state due to an elastic force or other reasons, and at this time, the airbag structure is extracted.

In some embodiments of the present invention, the axial limiting may be provided by other structures of the battery, such as an upper cover of the battery or an inner wall of a casing, and in some embodiments, at least one annular limiting surface is provided, the annular limiting surface at least abuts against the upper end of the tubular structure 6, and a hole allowing the airbag structure to be extracted is provided.

In further embodiments of the present invention, the force applying device 9 can also be a rigid mechanical structure of other structure types, and preferably includes: at least two rigid arms which can get close to or away from each other; and a control unit, the control unit being used for providing a force for driving the two rigid arms to move by overcoming constraint of the deformation portion 1.

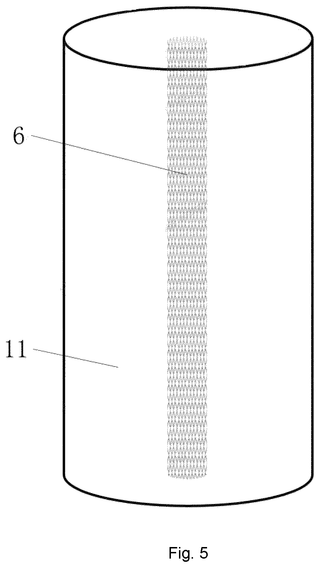

As shown in Fig. 5, a battery 11 according to preferred embodiments is shown, and includes the battery central tube according to any one above. Further, in some embodiments, the battery 11 includes a battery body and a battery central tube provided inside the battery body.

The content above merely relates to some embodiments of the present invention, and thus does not limit the embodiments of the present invention and the scope of protection thereof. A person skilled in the art should be aware that all solutions obtained by using equivalent replacements and obvious variations made according to the description and the drawings of the present invention shall fall within the scope of protection of the present invention.

## Claims

1. A battery central tube, comprising: at least one deformation portion, wherein the at least one deformation portion (1) is arranged in an annular shape, an outer side of each of the at least one deformation portion (1) has an expanded state and a contracted state, an outer wall of the deformation portion gets close to an inner wall of a central hole of a battery when the each of the at least one deformation portion is in the expanded state, and the outer wall of the each of the at least one deformation portion is able to get away from the inner wall of the central hole when the each of the at least one deformation portion (1) is in the contracted state; wherein the each of the at least one deformation portion (1) comprises several foldable units (2), the several foldable units (2) are sequentially arranged along an annular direction of the each of the at least one deformation portion (1), each of the several foldable units (2) has an unfolded state and a folded state, and when the each of the several foldable units (2) is in the unfolded state, the each of the several foldable units (2) is elongated along the annular direction of the each of the at least one deformation portion (1); and when the each of the several foldable units (2) is in the folded state, the each of the several foldable units (2) is shortened in the annular direction of the each of the at least one deformation portion (1).

2. The battery central tube according to claim 1, wherein the each of the foldable units (2) at least comprises: at least one first portion (3) and at least one second portion (4), wherein a deformation angle (5) is formed between the at least one first portion (3) and the at least one second portion (4); when the deformation angle (5) increases, a corresponding foldable unit (2) is elongated; and when the deformation angle (5) decreases, the corresponding foldable unit (2) is shortened.

3. The battery central tube according to claim 1, wherein several deformation portions (1) are sequentially arranged in an axial direction, and the several deformation portions (1) collectively form a tubular structure (6).

4. The battery central tube according to claim 3, wherein every two adjacent deformation portions (1) in the plurality of the at least one deformation portion are directly connected or indirectly connected.

5. The battery central tube according to claim 4, wherein the every two adjacent deformation portions (1) are indirectly connected by a connecting portion (7), and the connecting portion (7) extends in the axial direction of the plurality of deformation portions (1).

6. The battery central tube according to claim 1, wherein at least one mesh hole (8) is formed between every two adjacent deformation portions (1) in a plurality of the at least one deformation portion.

7. The battery central tube according to claim 1, wherein the at least one deformation portion (1) is made of a metal material or a non-metal material.

8. The battery central tube according to claim 1, wherein an inner side of the at least one deformation portion (1) has at least one annular contact surface (10), and when the annular contact surface (10) is subjected to a radially outward pressure, the each of the several foldable units (2) is elongated.

9. The battery central tube according to claim 8, wherein the battery central tube further comprises: a force applying device (9), wherein the force applying device (9) is configured to movably extend into the inner side of the at least one deformation portion (1), and the force applying device (9) is used for providing a pressure.

10. The battery central tube according to claim 2, wherein the deformation portion (1) is composed of a plurality of the at least one first portion (3) and a plurality of the at least one second portion (4) alternately connected in sequence.

11. The battery central tube according to claim 5, wherein the at least one deformation portion (1) is of a wave-shaped structure along a length direction thereof, a wave crest of the wave-shaped structure is connected to another upper-side adjacent deformation portion (1) via the connecting portion (7), and a wave trough of the wave-shaped structure is connected to another lower-side adjacent deformation portion (1) via another connecting portion (7).

12. A battery, comprising the battery central tube according to any one of claims 1-11.
